Europäisches Patentamt

European Patent Office

Office européen des brevets

(19)

(11) Veröffentlichungsnummer: **0 319 751 B1**

# EUROPÄISCHE PATENTSCHRIFT

(12)

(45) Veröffentlichungstag der Patentschrift: **10.02.93**

(21) Anmeldenummer: **88119172.0**

(22) Anmeldetag: **18.11.88**

(51) Int. Cl.⁵: **C08G 12/12**, C08G 12/40, C08J 9/14

Die Akte enthält technische Angaben, die nach dem Eingang der Anmeldung eingereicht wurden und die nicht in dieser Patentschrift enthalten sind.

---

(54) **Harnstoff-Formaldehyd-Harz, seine Herstellung und seine Verwendung.**

---

(30) Priorität: **08.12.87 DE 3741438**

(43) Veröffentlichungstag der Anmeldung:
**14.06.89 Patentblatt 89/24**

(45) Bekanntmachung des Hinweises auf die Patenterteilung:
**10.02.93 Patentblatt 93/06**

(84) Benannte Vertragsstaaten:
**AT BE CH DE ES FR GB IT LI LU NL**

(56) Entgegenhaltungen:
**EP-A- 0 006 112**
**EP-A- 0 066 233**
**DD-A- 137 239**

**AMINOPLASTE, A. BACHMANN et al.
:"Aminoplaste", VEB Deutscher Verlag für
Grundstoffindustrie, Leipzig, DDR, 1970**

**DUROPLASTE, W. WOEBCKEN
:"Harnstoffharze", Kunststoffhandbuch Nr.
10, Duroplaste, 2. Auflage, 1988, Carl Hanser
Verlag, München**

(73) Patentinhaber: **Schöllhorn, Wolf-Dietrich
Jakobstrasse 29
W-6718 Grünstadt(DE)**

(72) Erfinder: **Schöllhorn, Wolf-Dietrich
Jakobstrasse 29
W-6718 Grünstadt(DE)**

(74) Vertreter: **Ratzel, Gerhard, Dr.
Seckenheimer Strasse 36a
W-6800 Mannheim 1(DE)**

---

**Beschreibung**

Die Erfindung betrifft ein stark exotherm härtendes Harnstoff-Formaldehyd-Harz, erhalten durch Kondensation von Harnstoff mit Formaldehyd in alkalischem Milieu.

In der Europäischen Patentschrift 0066233 wird ein stark exotherm härtendes Harnstoff-Formaldehyd-Harz, seine Herstellung sowie seine Verwendung zur Herstellung daraus gewinnbarer Schaumprodukte beschrieben.

Dieses Verfahren arbeitet mit einer Kondensation von Harnstoff mit Formaldehyd in alkalischem Milieu, in Gegenwart von NaOH und $NH_3$ oder Guanidin-Base und ggfs. $NH_3$, bei einer Kondensationstemperatur von 80 bis 105 °C, einer Kondensationsdauer von 2 bis 4, vorzugsweise 2,5 bis 3,5 Stunden, mit anschließender Aufkonzentrierung im Vakuum auf 75 bis 100 % Feststoffgehalt.

Bei diesem beschriebenen Verfahren ist eine Aufkonzentrierung im Vakuum unerläßlich; naturgemäß fallen dabei große Mengen umweltbelastender Abwässer an.

Dieses Verfahren ist für zahlreiche Anwendungen und Verwendungsgebiete sehr zufriedenstellende.

Für besondere Anwendungen ist es jedoch erforderlich, mit reduzierten Abwassermengen zu arbeiten.

Durch die DD-PS 137239 ist die Herstellung von Aminoplastharzen in einem Zweistufenverfahren bekannt, die als Reaktionspartner für Polyisocianate bei der Schaumstoffherstellung dienen.

Als Ausgangsstoffe für die Aminoplastharze werden Formaldehyd und ein Aminoplastbildner eingesetzt, wobei als Aminoplastbildner Harnstoff oder Melamin, oder Guanidin und dessen Salze oder Dicyandiamid, sowie Gemische dieser Verbindungen, Alkyl- bzw. Aryldiamino-s-triazine, wie Acetoguanamid oder Benzoguanamin in Frage kommen, oder ein Gemisch von Harnstoff und Melamin zur Anwendung kommen kann.

Die Lehre dieser Patentschrift betrifft demnach die Herstellung eines Harnstoff-Formaldehyd-Harzes, das zusätzlich Melamin oder auch Dicyandiamid, Benzoguanamin enthält, in einem Zweistufenverfahren, wobei in saurem pH-Bereich gearbeitet wird, auch wenn Melamin zugegeben wird, und wobei ein Aufkonzentrierungsschritt unerläßlich ist.

In der gutachtlich zu zitierenden Literaturstelle "Duroplast, Kunststoff Handbuch", Band 10, S. 276, 3.5.2.2, 1988 werden Erkenntnisse, die dem Allgemeinwissen eines Fachmanns gehören, dargelegt, wie z.B. daß Paraformaldehyd eine gewisse Rolle bei der Herstellung von Harnstoffharzen spielte, um die Wassermenge gering zu halten.

Aus dieser Literaturstelle geht jedoch nicht hervor, daß eine solche Erkenntnis sich zu einer entsprechenden technischen Lehre im Sinne einer Anweisung zur Herstellung von stark exotherm reagierendem Harz entwickelt haben konnte.

Demgegenüber liegt vorliegender Erfindung die Aufgabe zugrunde, Harnstoff-Formaldehyd-Harze zu liefern, die mit reduzierten oder vollständig entfallenden Abwassermengen, und damit umweltfreundlich, hergestellt werden können, unter Beibehaltung der gewünschten vorteilhaften Produkt- und Verfahrens-, beispielsweise Verschäumungs- Eigenschaften.

Diese Aufgabe wird erfindungsgemäß bei einem Harnstoff-Formaldehyd-Harz der eingangs genannten Gattung dadurch gelöst,

daß es erhalten wird durch

a) Kondensation in einer ersten Kondensations-Stufe I, von 0,2 bis 0,7, vorzugsweise 0,5 Molen Harnstoff, mit 1,2 bis 3 Molen, vorzugsweise mit 1,7 bis 2,2 Molen Formaldehyd in Form von festem Paraformaldehyd, in ausschließlich alkalischem Medium, bei einem sich einstellenden Anfangs-pH-Wert von 8 - 12, Vorzugsweise 9 - 11,

b) in Gegenwart von 1 bis 10 m Molen NaOH und 10 bis 80 m Molen $NH_3$

oder

in Gegenwart von 2,5 bis 50 m Molen Guanidin-Base und 0 bis 80 m Molen $NH_3$

pro 1 Mol Formaldehyd

c) bei einer Kondensations-Temperatur (I) von 90 bis 110 °C,

d) bei einer Kondensations-Dauer (I) von 10 bis 100 Minuten, vorzugsweise 15 bis 70 Minuten,

e) anschließende Zugabe, in einer zweiten Kondensations-Stufe II von weiteren 0,2 bis 0,7, vorzugsweise 0,5 Molen Harnstoff,

f) bei einer Kondensations-Temperatur (II) von 10 bis 120 °C,

g) bei einer weiteren Kondensations-Dauer (II) von 1,5 bis 5 Stunden.

Besondere Ausführungsformen sind

dadurch gekennzeichnet,

daß vor, während oder nach der Kondensation (I und/ oder II) Kohlehydrate oder deren thermische Zersetzungsprodukte zugesetzt werden,

2

daß vor, während oder nach der Kondensation (I und/ oder II), vorzugsweise jedoch vor der Kondensation Cyanamid bzw. Dicyandiamid und/oder Benzoguanamin in Mengen von 5 bis 80 m Molen pro Mol Harnstoff zugesetzt wird (werden),

daß das erhaltene Harz eine Reaktivität von 10 bis 70 ° C, vorzugsweise 25 bis 50 ° C aufweist,

daß das erhaltene Harz eine Viskosität von 50 bis 400 dPas bei 25 ° C bei einem Feststoff-Gehalt von z. B. 82 % aufweist,

und daß eine Abpufferung der Ansätze nach der Kondensation II, vorzugsweise-durch $H_3PO_4$/Glykol-Mischung, bis ca. zum Neutral-Punkt bei 50 bis 80 ° C erfolgt.

Beansprucht wird weiterhin die Verwendung des erfindungsgemäßen Harnstoff-Formaldehyd-Harzes zur Herstellung von Schaumprodukten.

Weiterhin wird beansprucht ein Verfahren zur Herstellung des erfindungsgemäßen Harnstoff-Formaldehyd-Harzes,

dadurch gekennzeichnet,

daß in Gegenwart von Emulgatoren, niedrig siedendem Treibmittel wie z. B. n-Pentan, Monofluortrichlormethan und gegebenenfalls in Gegenwart weiterer Zusatzstoffe wie Plastifizierungsmittel, Flammschutzmittel, Füllstoffe, Fasern, Verstärkungsmittel und Farbstoffe durch Zugabe eines Härtungskatalysators das Harz in stark exothermer Bildungsreaktion zum Aminoplasten polykondensiert und dabei die Mischung selbstständig aufschäumt und erstarrt.

Besondere Ausführungsformen des erfindungsgemäßen Verfahrens sind

dadurch gekennzeichnet,

daß als Härtungskatalysator Phosphorsäure eingesetzt wird,

daß der Harzlösung und/oder dem Härtungskatalysator ein Amin, vorzugsweise Triäthanolamin, in Mengen von 0,3 bis 10 Gew.-% bezogen auf den Feststoffgehalt zugesetzt wird,

daß die Verschäumung in Gegenwart von-Kohlenhydraten, vorzugsweise Rohrzucker, Stärke und/oder deren Zersetzungsprodukten, in Mengen bis 20 Gew.-% bezogen auf den Feststoffgehalt, durchgeführt wird,

daß die Verschäumung in Gegenwart von Cyanamid bzw. Dicyandiamid, in Mengen von 0,5 bis 10 Gew.-% vorzugsweise 1 bis 5 Gew.-% bezogen auf den Feststoffgehalt, durchgeführt wird,

und daß bei der Verschäumung der Harze bzw. kurz nach der Verschäumung eine zusätzliche Energiezufuhr in Form von Hochfrequenzwellen, z.B. Mikrowellen erfolgt.

Beansprucht werden außerdem die Verwendung des erfindungsgemäßen Harzes zur Herstellung von Schaumprodukten.

Die nach dem erfindungsgemäßen Verfahren hergestellten Schäume bilden bei Einwirkung von Feuer oder Strahlungshitze eine stark aufschäumende Kohleschutzschicht aus.

Die Verwendung von Hochfrequenzellen bewirkt ein erheblich schnelleres und gleichmäßigeres Austrocknen des Schaumstoffes; damit wird die Gefahr der Rißbildung in Schaumblöcken durch Schwindung stark reduziert bzw. ganz vermieden.

Die Messung der Reaktivität erfolgt analog wie in der Europäischen Patentschrift 00 66 233 beschrieben, lediglich werden 100 g einer Harzprobe und 10 g $H_3PO_4$ 85%ig eingesetzt.

Gemäß oben genannter europäischer Patentschrift erfolgt der Test in einem Polyäthylenbecher mit einem oberen Durchmesser von 6 und einem unteren Durchmesser von 5,5 cm bei einer Höhe von 7 cm. Während der Messung wird der Becher 4 cm tief in ein entsprechendes Loch eines Harnstof-Formaldehydschaumblöckchens gestellt.

Gemischtwird während 20 sec. mit einem Thermometer, welches zur Messung dann so in die Masse gehalten wird, daß es die Wandung und den Boden des Gefäßes nicht berührt. Abgelesen wird die maximale Temperaturerhöhung.

Die vorliegende Erfindung bietet neben Umweltfreundlichkeit und reduzierten oder beseitigten Abwasserproblemen noch die Vorteile höherer Kapazität der Herstellung pro Reaktorvolumeneinheit, reduzierter Verfahrens -und Anlagenkosten aufgrund des Wegfalls der Aufkonzentrierung im Vakuum und wirtschaftliche Verbesserungen, d. h. kostengünstigere Herstellung.

Beispiel 1

| 310 | Gew-Tl | Harnstoff |
|---|---|---|
| 20 | " | Dicyandiamid |
| 20 | " | Benzoguanamin |
| 45 | " | NH$_3$ 25%ig |
| 30 | " | Methanol |
| 2,7 | " | NaOH |
| 584 | " | Paraformaldehyd 95%ig |

Die Kondensation I dauert 20 Minuten bei einer Temperatur von etwa 103 °C.
Es erfolgt Zugabe von

| 310 | " | Harnstoff |
|---|---|---|

Die Kondensation II dauert 1 h 50 Minuten bei einer Temperatur von 110 °C.
Das erhaltene Harz hat eine Viskosität $\eta$ = 34 dPas bei 20 °C und eine Reaktivität von 36,5 °C.

Beispiel 2

| 310 | Gew-Tl | Harnstoff |
|---|---|---|
| 20 | " | Dicyandiamid |
| 20 | " | Benzoguanamin |
| 18 | " | NH$_3$ 33%ig |
| 30 | " | Methanol |
| 15 | " | Guanidinbase |
| 1 | " | NaOH |
| 584 | " | Paraformaldehyd 95%ig |

Die Kondensation I dauert 20 Minuten.
Es erfolgt Zugabe von

| 310 | " | Harnstoff |
|---|---|---|

Die Kondensation II dauert 2 h 10 Minuten.
Das erhaltene Harz hat eine Viskosität $\eta$ = 220 dPas bei 20 °C und eine Reaktivität von 29,5 °C.

Beispiel 3

| 310 | Gew-Tl | Harnstoff |
|---|---|---|
| 20 | " | Dicyandiamin |
| 30 | " | Guanidinbase 32%ig |
| 602 | " | Paraformaldehyd 96%ig |

Die Kondensation I dauert 50 Minuten.
Es erfolgt Zugabe von

| 316 | Gew-Tl | Harnstoff |
|---|---|---|

Die Kondensation dauert 2h 10 Minuten.
Abkühlung des Harzes auf 80 - 50°C

EP 0 319 751 B1

$$\left.\begin{array}{l} \text{Dann Abpufferung mit ca. } 3,5 \text{ Gew.-Tl. } H_3PO_4 \text{ 85\%ig} \\ \qquad\qquad\qquad\qquad 12 \quad " \quad \text{Glykol} \end{array}\right\} \text{ gemischt}$$

Das erhaltene Harz hat eine Viskosität von $\eta$ = 205 dPas bei 25°C und eine Reaktivität von 43°C.

**Patentansprüche**

1. Stark exotherm härtendes Harnstoff-Formaldehyd-Harz,
erhalten durch Kondensation von Harnstoff mit Formaldehyd in alkalischem Milieu,
dadurch gekennzeichnet,
daß es dadurch erhältlich ist, daß man eine erste Kondensationsstufe I folgendermaßen durchführt:
a) Kondensation von 0,2 bis 0,7, vorzugsweise 0,5 Molen Harnstoff, mit 1,2 bis 3 Molen, vorzugsweise 1,7 bis 2,2 Molen Formaldehyd in Form von festem Paraformaldehyd, in ausschließlich alkalischem Medium, bei einem sich einstellenden Anfangs-pH-Wert von 8 - 12, vorzugsweise 9 - 11,
b) in Gegenwart von 1 bis 10 m Molen NaOH und 10 bis 80 m Molen $NH_3$ oder in Gegenwart von 2,5 bis 50 m Molen Guanidin-Base und 0 bis 80 m Molen $NH_3$ pro Mol Formaldehyd,
c) bei einer Kondensations-Temperatur (1) von 90 bis 110°C,
d) bei einer Kondensationsdauer (1) von 10 bis 100 Minuten, vorzugsweise 15 bis 70 Minuten,
und daß man sodann eine zweite Kondensationsstufe II folgendermaßen durchführt:
e) Zugabe von weiteren 0,2 bis 0,7 vorzugsweise 0,5 Molen Harnstoff,
f) bei einer Kondensations-Temperatur (II) von 100 bis 120°C,
g) bei einer weiteren Kondensations-Dauer (II) von 1,5 bis 5 Stunden.

2. Stark exotherm härtendes Harnstoff-Formaldeyhd-Harz nach Anspruch 1,
dadurch gekennzeichnet,
daß vor, während oder nach den Kondensation (I und/oder II) Kohlehydrate oder deren thermische Zersetzungsprodukte zugesetzt werden.

3. Stark exotherm härtendes Harnstoff-Formaldehyd-Harz nach Ansprüchen 1 bis 2,
dadurch gekennzeichnet,
daß vor, während oder nach der Kondensation (I und/oder II), vorzugsweise jedoch vor der Kondensation, Cyanamid bzw. Dicyanamid und/oder Benzoguanamin in Mengen von 5 bis 80 m Molen pro Mol Harnstoff zugesetzt wird (werden).

4. Stark exotherm härtendes Harnstoff-Formaldehyd-Harz nach Ansprüchen 1 bis 3,
dadurch gekennzeichnet,
daß das erhaltene Harz eine Reaktivität von 10 bis 70 °C, vorzugsweise 25 bis 50 °C aufweist.

5. Stark exotherm härtendes Harnstoff-Formaldehyd-Harz nach Ansprüchen 1 bis 4,
dadurch gekennzeichnet,
daß das erhaltene Harz eine Viskosität von 50 bis 400 dPas bei 25°C bei einem Feststoff-Gehalt von 82 % aufweist.

6. Stark exotherm härtendes Harnstoff-Formaldehyd-Harz nach Ansprüchen 1 bis 5,
dadurch gekennzeichnet,
daß eine Abpufferung der Ansätze nach der Kondensation II, vorzugsweise durch $H_3PO_4$/Glykol-Mischung, bis ca. zum Neutralpunkt bei 50 bis 80°C erfolgt.

7. Verwendung des stark exotherm härtenden Harnstoff-Formaldehyd-Harzes nach Ansprüchen 1 bis 6,
zur Herstellung von Schaumprodukten.

8. Verfahren zur Herstellung von Schaumprodukten aus stark exotherm härtendem Harnstoff-Formaldehyd-Harz nach Ansprüchen 1 bis 6,
dadurch gekennzeichnet,
daß in Gegenwart von Emulgatoren, niedrig siedendem Treibmittel wie z.B. n-Pentan, Monofluortrichlormethan und gegebenenfalls in Gegenwart weiter Zusatzstoffe wie Plastifizierungsmittel, Flammschutzmittel, Füllstoffe, Fasern, Verstärkungsmittel und Farbstoffe durch Zugabe eines Härtungskatalysators das Harz in stark exothermer Bildungsreaktion zu. Aminoplasten polykondensiert und dabei die Mischung selbständig aufschäumt und erstarrt.

**9.** Verfahren nach Anspruch 8,
dadurch gekennzeichnet,
daß als Härtungskatalysator Phosphorsäure eingesetzt wird.

**10.** Verfahren nach Ansprüch 1,
dadurch gekennzeichnet,
daß der Harzlösung und/oder dem Härtungskatalysator ein Amin, vorzugsweise Triäthanolamin, in Mengen von 0,3 bis 10 Gew.-% bezogen auf den Feststoffgehalt zugesetzt wird.

**Claims**

**1.** Strongly exothermically curing urea-formaldehyde resin, obtained by the condensation of urea with formaldehyde in an alkaline medium, **characterised in that** it is obtainable by carrying out an initial condensation stage I as follows:

a) condensation of 0.2 to 0.7, preferably 0.5, moles of urea with 1.2 to 3 moles, preferably 1.7 to 2.2 moles, of formaldehyde in the form of solid paraformaldehyde in an exclusively alkaline medium, with an initial pH value of 8 - 12, preferably 9 - 11, being set,
b) in the presence of 1 to 10 m moles of NaOH and 10 to 80 m moles of $NH_3$ or in the presence of 2.5 to 50 m moles of guanidine base and 0 to 80 m moles of $NH_3$ per mole of formaldehyde,
c) at a condensation temperature (I) of 90 to 110 °C,
d) with a condensation time (I) of 10 to 100 minutes, preferably 15 to 70 minutes,
and that a second condensation stage II is then carried out as follows:
e) addition of a further 0.2 to 0.7, preferably 0.5, moles of urea,
f) at a condensation temperature (II) of 100 to 120 °C,
g) with a further condensation time (II) of 1.5 to 5 hours.

**2.** Strongly exothermically curing urea-formaldehyde resin according to claim 1, **characterised in that** before, during or after the condensation (I and/or II) carbohydrates or their thermal decomposition products are added.

**3.** Strongly exothermically curing urea-formaldehyde resin according to claims 1 to 2, **characterised in that** before, during or after the condensation (I and/or II), but preferably before the condensation, cyanamide, dicyanamide and/or benzoguanamine is (are) added in amounts of 5 to 80 m moles per mole of urea.

**4.** Strongly exothermically curing urea-formaldehyde resin according to claims 1 to 3, **characterised in that** the resin obtained exhibits a reactivity of 10 to 70 °C, preferably 25 to 50 °C.

**5.** Strongly exothermically curing urea-formaldehyde resin according to claims 1 to 4, **characterised in that** the resin obtained exhibits a viscosity of 50 to 400 dPas at 25 °C with a solids content of 82%.

**6.** Strongly exothermically curing urea-formaldehyde resin according to claims 1 to 5, **characterised in that** buffering of the deposits takes place after the condensation II, preferably by means of an $H_3PO_4$/glycol mixture, up to approximately the neutral point at 50 to 80 °C.

**7.** Use of the strongly exothermically curing urea-formaldehyde resin according to claims 1 to 6 for the manufacture of foam products.

**8.** Method for the manufacture of foam products from strongly exothermically curing urea-formaldehyde resin according to claims 1 to 6, **characterised in that** in the presence of emulsifiers, low-boiling blowing agents such as e.g. n-pentane, monofluorotrichloromethane and where necessary in the presence of further additives such as plasticizing agents, flame retardants, fillers, fibres, reinforcing agents and pigments, by the addition of a catalyst the resin is polycondensed in a strongly exothermic formation reaction to aminoplastics and at the same time the mixture foams and solidifies independently.

9. Method according to claim 8, **characterised in that** phosphoric acid is used as the catalyst.

10. Method according to claim 1, **characterised in that** there is added to the resin solution and/or the catalyst an amine, preferably triethanolamine, in amounts of 0.3 to 10 % by wt referred to the solids content.

**Revendications**

1. Résine urée-formaldéhyde durcissable de manière fortement exothermique obtenue par condensation d'urée et de formaldéhyde en milieu alcalin, caractérisée en ce qu'elle est obtenue par la mise en oeuvre d'une première étape I de condensation comme suit :
   a) Condensation de 0,2 à 0,7 mole d'urée, avantageusement 0,5 mole, avec 1,2 à 3 moles de formaldéhyde, avantageusement 1,7 à 2,2 moles, sous forme de paraformaldéhyde solide, en milieu exclusivement alcalin, à une valeur de pH de départ de 8 à 12, avantageusement de 9 à 11,
   b) En présence de 1 à 10 m moles de NaOH et de 10 à 80 m moles de $NH_3$ ou en présence de 2,5 à 50 m moles de guanidine-base et de 0 à 80 m moles de $NH_3$ par mole de formaldéhyde,
   c) A une température de condensation (I) de 90 à 110°C,
   d) Pendant un temps de condensation (I) de 10 à 100 mn, avantageusement de 15 à 70 mn, et en ce qu'on met en oeuvre ensuite une seconde étape de condensation (II) de la manière suivante :
   e) Addition de 0,2 à 0,7 mole supplémentaire d'urée, avantageusement 0,5 mole,
   f) A une température de condensation (II) de 100 à 120°C,
   g) Pendant un temps de condensation (II) supplémentaire de 1,5 à 5 heures.

2. Résine urée-formaldéhyde durcissable de manière fortement exothermique selon la revendication 1, caractérisée en ce qu'on additionne avant, pendant ou après les condensations (I et/ou II) des hydrates de carbone ou leurs produits de décomposition thermique.

3. Résine urée-formaldéhyde durcissable de manière fortement exothermique selon les revendications 1 et 2 caractérisée en ce que avant, pendant et après la condensation (I et/ou II), avantageusement cependant avant la condensation, on ajoute du cyanamide ou du dicyanamide et/ou de la benzoguanidine suivant des quantités de 5 à 80 m moles par mole d'urée.

4. Résine urée-formaldéhyde durcissable de manière fortement exothermique selon les revendications 1 à 3 caractérisée en ce qu'elle possède une réactivité de 10 à 70°C, avantageusement de 25 à 70°C.

5. Résine urée-formaldéhyde durcissable de manière fortement exothermique selon les revendications 1 à 4, caractérisée en ce qu'elle possède une viscosité de 50 à 400 dPas à 25°C avec un pourcentage en matière solide de 82%.

6. Résine urée-formaldéhyde durcissable de manière fortement exothermique, caractérisée en ce qu'on neutralise à l'aide d'une solution tamponnée le mélange après la condensation II, avantageusement avec un mélange $H_3PO_4$-glycol, aux environs du point neutre à une température de 50 à 80°C.

7. Utilisation de la résine urée-formaldéhyde durcissable de manière fortement exothermique selon les revendiations 1 à 6 à la fabrication de produits moussants.

8. Procédé de préparation de produits moussants à partir de résine urée-formaldéhyde durcissable de manière fortement exothermique selon l'une des revendications 1 à 6, caractérisé en ce qu'on réalise une polycondensation de la résine en présence d'émulsifiant, d'agent de propulsion à faible point d'ébullition, tel le n-pentane, le monofluorotrichlorométhane et le cas échéant en présence d'autres produits d'addition comme les plastifiants, des moyens de protection contre les flammes, des matières de remplissage, des fibres, des produits de renforcement, et des colorants, par addition d'un catalyseur de durcissement, par une réaction de formation, fortement exothermique, en aminoplastes, en ce qu'on fait mousser indépendamment le mélange et enfin durcir.

**9.** Procédé selon la revendication 8, caractérisé en ce qu'on utilise l'acide phosphorique comme catalyseur de durcissement.

**10.** Procédé selon la revendication 8 ou bien 1, caractérisé en ce qu'on ajoute à la solution de résine et/ou au catalyseur de durcissement une amine, avantageusement la triéthanolamine, suivant une quantité de 0,3 à 10% en masse calculé par rapport à la quantité de matière solide.